# DEMANDE DE BREVET EUROPEEN

(11) **EP 0 893 285 A1**
(43) Date de publication de la demande: **27.01.1999**
(21) Numéro de dépôt: 98112980.2
(22) Date de dépôt: 13.07.1998
(51) Int. Cl.: B60C 29/02

(54) **Valve et jante pour roue de bicyclette prévues pour un montage tubeless**

(30) Priorité: 25.07.1997 FR 9709929
(71) Demandeur: MAVIC S.A., 01990 Saint-Trivier sur Moignans (FR)
(72) Inventeur: Lacombe, Jean-Pierre, 74150 Marcellaz Albanais (FR); Mercat, Jean-Pierre, 01990 Saint Trivier sur Moignans (FR)
(74) Mandataire: Lejeune, Benoit

(57) **Abrégé**

L'invention concerne une valve de gonflage prévue pour le gonflage d'un pneu de cycle monté sans chambre à air sur une jante. La valve comprend un corps traversé par un conduit, avec une première portion (24) prévue pour traverser le caisson de la jante, et une seconde portion (25) prévue pour le raccordement d'un moyen de gonflage. Elle est caractérisée par le fait qu'elle présente un embout d'injection (26) situé dans le prolongement de la première portion, un joint d'étanchéité (28) situé autour de l'embout d'injection, et que la première portion ou l'embout présente des moyens d'assemblage prévus pour coopérer avec des moyens d'assemblage complémentaires de la jante.

## Description

L'invention concerne une valve pour une jante de bicyclette prévue pour un montage tubeless du pneumatique c'est-à-dire un montage sans chambre à air.

L'invention concerne également une jante nue prévue pour un montage tubeless, une jante et une roue complète équipées d'une telle valve.

Les roues sans chambre à air sont avantageuses car elles économisent le poids, le coût et le montage de la chambre à air. En outre, elles présentent un risque moindre de crevaison. En effet, un corps étranger qui traverse la paroi du pneu reste en général emprisonné dans le pneu, si bien que dans une telle circonstance, la roue reste gonflée plus longtemps qu'une roue avec chambre à air.

Les roues sans chambres à air sont connues par de nombreuses demandes de brevet ou brevet publiées, par exemple les demandes publiées sous les numéros DE 37 27 051, EP 615865, ou le brevet publié sous le numéro US 3,008,770.

Toutes ces publications décrivent des moyens pour rendre étanche la jante au niveau des orifices de passage des rayons. Ces moyens comprennent généralement un fond de jante qui recouvre les orifices de rayons, et rejoint latéralement les bords du pneumatique de façon à définir une cavité fermée.

On connaît aussi la demande de brevet publiée sous le numéro WO 9309963 une jante à deux ponts, dont le pont supérieur n'est pas percé, les écrous de rayon étant vissés directement dans le pont inférieur. La cavité étanche est alors définie par le pont supérieur de la jante et le pneumatique.

Ainsi, on sait rendre étanche ou quasiment étanche une cavité annulaire comprise entre le pneumatique et la jante, sans utiliser une chambre à air.

Le problème se pose alors de remplir d'air cette cavité au travers d'une valve qui traverse la paroi de la jante. En outre, la traversée de la paroi de la jante par la valve doit être étanche. Certaines constructions existantes associent la valve au fond de jante. La demande de brevet européen publiée sous le numéro EP 616 911 divulgue un tel fond de jante.

Cela ne résout pas tous les problèmes d'étanchéité. En outre, un changement de valve impose un démontage complet du pneumatique. Enfin, cela rend indispensable le fond de jante, qui est en grande partie inutile puisque la chambre à air est absente.

Un but de l'invention est de proposer une valve prévue pour une jante à montage sans chambre à air qui soit simple à fabriquer, facile à installer sur une jante, et le cas échéant facile à échanger.

Un autre but de l'invention est de proposer une jante nue prévue pour recevoir la valve précédente, la jante étant simple à fabriquer au niveau de l'orifice de réception de la valve, permettant un montage facile, le cas échéant un démontage facile sans nécessiter un démontage du pneumatique.

Un autre but de l'invention est de proposer une jante équipée d'une valve qui assure une excellente étanchéité au niveau de la liaison entre la jante et la valve.

Ces buts et d'autres buts de l'invention sont atteints par une valve de gonflage comprenant un corps traversé par un conduit, avec une première portion prévue pour traverser le caisson de la jante, et une seconde portion prévue pour le raccordement d'un moyen de gonflage, caractérisée par le fait qu'elle présente un embout d'injection situé dans le prolongement de la première portion, un joint d'étanchéité situé autour de l'embout d'injection, et que la première portion ou l'embout présente des moyens d'assemblage prévus pour coopérer avec des moyens d'assemblage complémentaires de la jante.

La jante selon l'invention comprend un caisson formé par un pont supérieur, un pont inférieur, deux flancs qui se prolongent au-delà du pont supérieur par deux ailes d'accrochage du pneu, deux orifices dans le prolongement l'un de l'autre à chacun des ponts pour le passage de la valve, la valve comprenant un corps avec une première portion prévue pour traverser le caisson, une seconde portion prévue pour l'accrochage d'un moyen de gonflage. Elle est caractérisée par le fait que le premier orifice de la jante situé au pont inférieur a un diamètre supérieur au second orifice du pont supérieur, que la première portion de la valve se prolonge par un embout d'injection de diamètre inférieur, qui est engagé dans le second orifice de la jante, qu'un joint d'étanchéité est prévu entre l'embout d'injection et le pont supérieur, et que des moyens d'assemblage complémentaires assemblent l'embout ou la première portion du corps au pont supérieur ou au pont inférieur de la jante, respectivement.

L'invention sera mieux comprise en se référant à la description ci-dessous et aux dessins en annexe qui en font partie intégrante.
La figure 1 représente une roue en vue de côté.
La figure 2 représente une vue en coupe d'une jante au niveau d'un orifice d'accrochage de rayon réalisé selon un mode préférentiel.
La figure 3 représente la jante de la figure 1 selon une coupe transversale réalisée au niveau de l'orifice prévu pour la valve.
La figure 4 représente une valve prévue pour équiper la jante précédente.
Les figures 5 et 6 montrent différentes vue en coupe de la jante équipée de la valve.
La figure 7 illustre une variante de réalisation de l'invention.

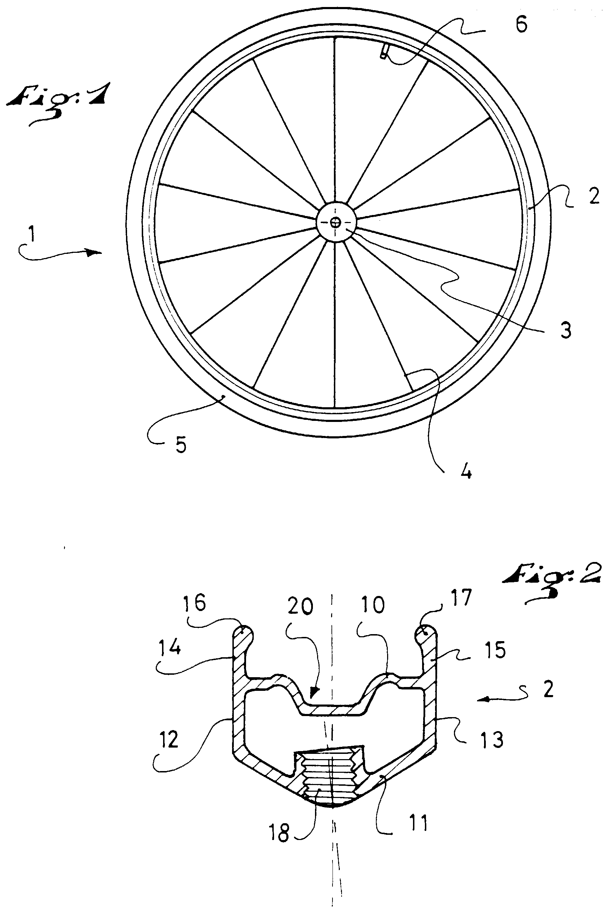

La figure 1 représente une roue 1 comprenant de façon connue une jante 2 reliée à un moyeu central 3 par deux nappes de rayons. Seule la nappe de rayon 4 est visible en figure 1. Les rayons sont de tout type approprié, droit ou coudé, et, ils sont disposés indifféremment selon un mode de rayonnage radial ou croisé. En outre, la roue est indifféremment une roue avant ou une roue arrière.

De façon connue, la jante est réalisée à partir d'un profilé cintré, dont les deux extrémités sont de préférence assemblées par soudure, afin d'obtenir une bonne étanchéité à ce niveau.

La roue 1 représentée en figure 1 est par ailleurs équipée d'un pneumatique 5. Le pneumatique 5 est un pneu de dimensions standards. Les dimensions du pneumatique sont par exemple définis par la norme ISO 5775-1.

De façon connue, un tel pneu présente une bande de roulement centrale bordée par deux flancs latéraux. La base des flancs latéraux ou talon est légèrement plus épaisse, et renferme une tringle rigide ou souple dont la longueur est définie.

La roue 1 représentée en figure 1 présente par ailleurs une valve de gonflage 6 qui fait l'objet de l'invention et sera décrite en détail ultérieurement.

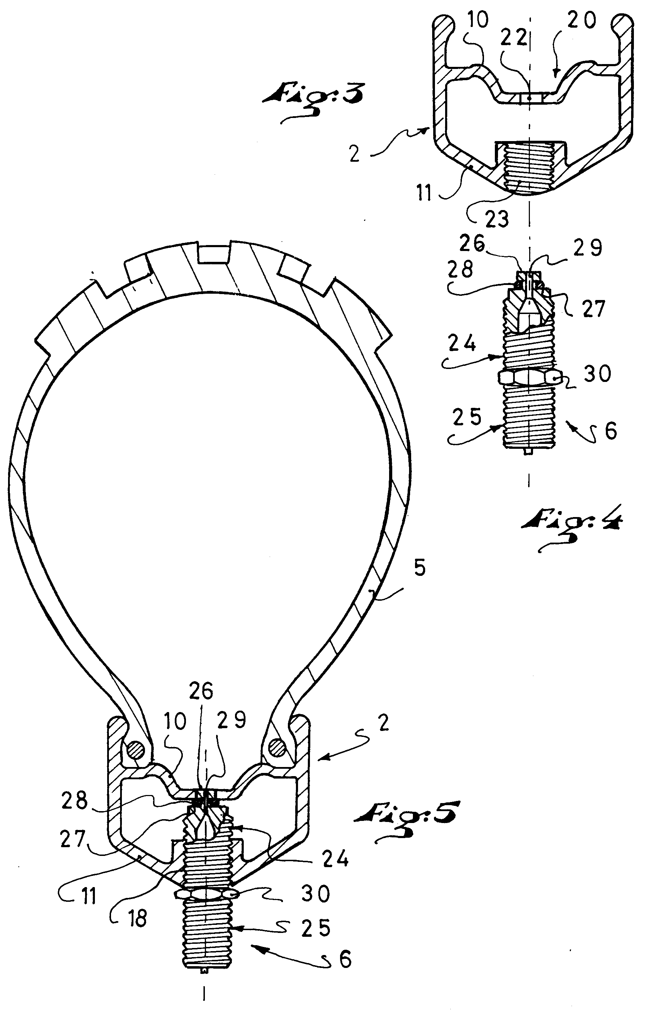

La figure 2 représente le profil de la jante 2 selon un mode préférentiel de mise en oeuvre de l'invention.

La jante 2 est prévue pour un montage tubeless du pneu 5. La jante 2 présente de façon connue un pont supérieur 10, un pont inférieur 11 reliés entre eux par deux flancs 12 et 13, de façon à former un caisson. Les flancs se prolongent vers l'extérieur par des ailes 14 et 15, qui présentent à leur extrémité un bourrelet 16, 17 qui agit comme un crochet vis à vis des flancs du pneu. Ces différents éléments sont connus.

De façon préférentielle, la jante 2 présente des orifices 18 d'accrochage pour les rayons qui sont situés seulement au niveau du pont inférieur 11. Ainsi, le pont supérieur 10 n'est pas percé d'orifices pour le passage ou l'accrochage de rayons, ce qui garantit une étanchéité parfaite du pont supérieur.

L'orifice 18 est taraudé pour permettre le vissage d'un écrou ou d'un embout d'accrochage, ainsi que le réglage du rayon en tension. Ces éléments sont de tout type approprié.

De façon préférentielle, le pont inférieur a été percé selon une technique de perçage par refoulement. Selon cette technique, au lieu d'être coupée, la matière est repoussée de façon à former une sorte de cheminée. La cheminée évite un affaiblissement du pont à ce niveau. Elle offre par ailleurs une surface interne qui peut facilement être taraudée.

Ce mode de perçage n'est pas limitatif, et tout mode d'accrochage des rayons convient.

Selon le mode de réalisation illustré, le pont supérieur 10 présente dans sa partie médiane une gorge annulaire 20. La gorge est destinée à faciliter le montage du pneumatique. Cependant, cette gorge, sa forme et ses dimensions ne sont pas limitatives pour l'invention.

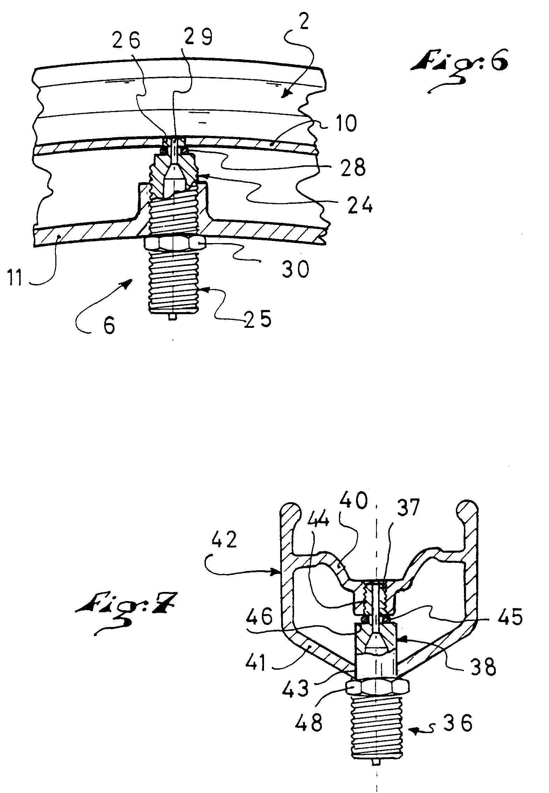

La figure 3 représente la jante 2 en coupe transversale au niveau du perçage prévu pour la valve 6 représentée en figure 4. De façon connue cette zone est située entre deux perçages prévus pour l'accrochage de rayons.

La valve 6 représentée en figure 4 comprend un corps creux avec un conduit interne 29 qui le traverse de part en part. Extérieurement, le corps est globalement cylindrique, avec une portion 24 qui est prévue pour traverser le caisson de la jante entre les deux ponts 10 et 11, et une portion 25 faisant saillie à l'extérieur du caisson. De façon connue, cette seconde portion est prévue pour être raccordée à une pompe ou un moyen extérieur de gonflage.

Un embout d'injection 26 de diamètre inférieur prolonge la portion 24. Cet embout d'injection est prévu pour traverser le pont supérieur 10 de la jante. La jonction entre l'embout d'injection 26 et la portion 24 forme un épaulement 27. Un joint, par exemple un joint torique 28 est engagé sur l'embout d'injection éventuellement au niveau d'une gorge. Ce joint est prévu pour être pressé entre l'épaulement 27 et le pont supérieur de la jante et réaliser l'étanchéité à ce niveau. De façon connue, le corps de valve présente un conduit interne 29 qui le traverse de part en part selon la direction longitudinale que la valve définit.

Selon l'invention, la portion 24 du corps de valve ou l'embout d'injection 26 est équipé de moyens d'assemblage prévus pour coopérer avec des moyens complémentaires de l'un des ponts 10 ou 11 de la jante.

Le mode de réalisation illustré montre une portion 24 filetée à sa surface extérieure. Ce filetage est prévu pour être vissé dans un orifice taraudé de la jante. Toutefois, comme cela sera dit ultérieurement, d'autres moyens qu'un filetage peuvent convenir.

Selon le mode de réalisation illustré, entre les deux portions 24 et 25, le corps de valve présente une bague 30. Cette bague est prévue pour prendre appui contre la surface externe du pont inférieur. Eventuellement, comme cela est illustré, la bague présente une section extérieure hexagonale, pour permettre le serrage de la valve dans son logement ou son démontage au moyen d'un outil tel qu'une clé. D'autres moyens peuvent aussi convenir.

La portion 25 de la valve prévue pour le raccordement d'un moyen de gonflage et le mécanisme interne de soupape sont de toute nature appropriée.

On sait que les valves pour cycle sont définies par la norme ETRTO (European Tyre and Rim Technical Organisation).

On connaît sur le marché pour les cycles les valves dites " PRESTA" avec un corps présentant un diamètre de 6,2 millimètres, et une soupape mobile qui peut être verrouillée en position d'obturation par un petit écrou moleté.

On connaît aussi les valves de type automobile avec un corps de diamètre 8,3 millimètres, et une soupape mobile montée à l'intérieur du corps et rappelée par un ressort.

Le corps de valve selon la présente invention peut être prévu pour que sa portion 25 en saillie présente extérieurement et intérieurement des dimensions usuelles pour recevoir une soupape d'un type connu et pour pouvoir être raccordée aux pompes ou autres moyens de gonflage habituels.

On peut aussi prévoir un corps de valve tel qu'il a été précédemment décrit, prévu pour recevoir un élément rapporté qui remplirait ces fonctions de raccordement et d'obturation.

De façon connue, les corps de valve, au moins ceux de type automobile, présentent une extrémité filetée pour recevoir un bouchon. Ce filetage situé dans la seconde portion du corps pourrait être prolongé en direction de l'embout d'injection. Ainsi, la première et la seconde portion seraient filetées dans le prolongement l'une de l'autre, au même pas. Dans ces conditions, la bague 30 peut être un élément rapporté taraudé qui est vissé sur le corps et qui agit à la manière d'un contre-écrou.

La jante prévue pour coopérer avec la valve va maintenant être décrite en référence aux figures 3, 5 et 6.

La jante est percée d'un orifice 23 à son pont inférieur 11, et, dans le prolongement, d'un orifice 22 situé au pont 10, au fond de la gorge 20. L'orifice 23 est percé et taraudé au diamètre et au pas du filetage de la zone 24 de la valve 6.

De préférence, cet orifice est réalisé par la même technique de perçage par refoulement que celle utilisée pour l'accrochage des rayons, de façon à former une cheminée qui est ensuite taraudée. Le diamètre interne de la cheminée et le pas du taraudage sont adaptés aux dimensions de la portion 24 de la valve et au pas de son filetage.

L'orifice 22 correspond au diamètre de l'embout d'injection 26. La longueur de l'embout est déterminée de préférence pour que l'embout traverse le pont 22 et que son extrémité affleure la surface externe du pont supérieur, c'est-à-dire le fond de la gorge 20 ou soit en retrait, compte tenu de l'épaisseur du joint 28 et de son écrasement au serrage. Ceci est fait dans le but de ne pas gêner le montage du pneu. Lorsque la valve est montée sur la jante, l'épaulement 27 comprime le joint 28 contre la paroi du pont 10. Le joint assure dans ces conditions l'étanchéité entre l'intérieur du pneu et le canal 29 de la valve. Comme le pont 10 ne présente pas d'autres orifices, selon le mode de réalisation décrit, on a de très bonnes conditions d'étanchéité au niveau de la jante. En outre, le mode de montage par vissage assure un très bon maintien du corps de valve dans la jante. En effet, il y a un assemblage mécanique entre la valve et la jante, et la valve est maintenue au niveau des deux ponts de la jante.

De préférence, la bague 30 est prévue pour se serrer contre le pont 11, et freiner de cette façon le serrage de la valve. Le but est d'éviter un écrasement excessif du joint 28 qui risquerait de le détériorer, et d'éviter aussi un serrage excessif qui risquerait de contraindre localement les deux ponts à l'éloignement. Pour cela, ou bien la bague 30 se trouve le long du corps à une distance de l'épaulement 27 approximativement égale à la distance entre les deux ponts 10 et 11, ou bien elle est mobile le long du corps et elle est serrée contre le pont inférieur à la manière d'un contre-écrou.

De ce qui précède, on comprend aisément que le montage et le démontage de la valve 6 sont réalisés de façon très simple par vissage et dévissage depuis l'extérieur de la jante. En particulier, les opérations de montage et démontage sont totalement indépendantes de la présence ou de l'absence du pneu. Notamment, la valve pourrait être échangée sans nécessiter un démontage du pneu. De même un pneu pourrait être démonté et remonté sans avoir à toucher la valve.

Le mode de réalisation qui vient d'être décrit met en oeuvre des moyens d'assemblage par vissage. Un tel mode d'assemblage n'est pas limitatif, et d'autres moyens pourraient convenir, par exemple à baïonnette, du type quart de tour ou autre, ou même des moyens d'assemblage rapides de type clip ou rivet, l'important étant de réaliser un assemblage mécanique de la valve à l'un des ponts, qui, parallèlement assure une étanchéité entre l'embout d'injection et le pont supérieur. Il faut remarquer par ailleurs que dans le cas présent, le montage de la valve ne nécessite qu'une seule pièce, c'est-à-dire la valve elle-même.

A titre indicatif, le montage du pneu 5 sur la jante 2 et son gonflage sont réalisés de la façon suivante.

Dans un premier temps, les flancs du pneu sont engagés sur l'une des ailes de la jante, et ils sont maintenus engagés dans la gorge. Le fait que la valve ne fasse pas saillie à l'intérieur de la gorge est avantageux car cela ne gêne pas cette opération. L'élasticité naturelle du pneu fait que les flancs viennent se coller contre les bords de la rainure. Dans ces conditions, l'embout d'injection 26 débouche dans le volume du pneu. En outre, une étanchéité relative existe entre le pneu et les bords de la rainure. Cette étanchéité se renforce au fur et à mesure du gonflage primaire du pneu, jusqu'à ce que, sous l'effet de la pression, les flancs du pneu franchissent les bords de la gorge et se plaquent contre les ailes.

La figure 7 illustre une variante de réalisation. Selon cette variante, la valve 36 présente un embout d'injection 37 fileté, et une portion 38 prévue pour traverser le caisson de la jante qui est lisse.

La jante 42 présente un caisson avec un pont inférieur 41 et un pont supérieur 40. Le pont inférieur 41 présente un perçage 43, percé au diamètre de la portion 38, et le pont supérieur 40 un trou 44 percé par refoulement et taraudé au diamètre de l'embout d'injection 37. Comme dans le cas précédent, un joint annulaire 45 est prévu pour être comprimé entre le bord du trou 44 et un épaulement 46 à la jonction entre l'embout d'injection et le reste du corps.

De préférence également, une bague 48 semblable à la bague 30 coopère avec le pont inférieur 41 de la jante pour limiter le serrage de la valve, afin d'éviter un écrasement du joint ou des contraintes excessives d'éloignement des ponts.

Comme dans le cas précédent, de préférence, l'embout d'injection 37 affleure la surface externe du pont supérieur 40, ou est en retrait par rapport à celle-ci.

L'invention n'est pas limitée aux différents modes de réalisation qui ont été décrits, et d'autres variantes sont possibles. En particulier, l'invention pourrait s'appliquer à d'autres profils de jante que celui qui a été décrit et représenté. La nature et le mode de montage du joint 28 d'étanchéité pourrait aussi être différent.

## Revendications

1. Valve de gonflage prévue pour le gonflage d'un pneu de cycle monté sans chambre à air sur une jante, comprenant un corps traversé par un conduit, avec une première portion (24, 38) prévue pour traverser le caisson de la jante, et une seconde portion (25, 39) prévue pour le raccordement d'un moyen de gonflage, caractérisée par le fait qu'elle présente un embout d'injection (26, 37) situé dans le prolongement de la première portion, un joint d'étanchéité (28, 45) situé autour de l'embout d'injection, et que la première portion ou l'embout présente des moyens d'assemblage prévus pour coopérer avec des moyens d'assemblage complémentaires de la jante.

2. Valve selon la revendication 1, caractérisée par le fait que sa première portion (24) est filetée.

3. Valve selon la revendication 1, caractérisée par le fait que l'embout d'injection (37) est fileté à sa surface extérieure.

4. Valve selon la revendication 1, caractérisée par le fait qu'elle présente une bague (30, 48) située entre la première et la seconde portion.

5. Valve selon la revendication 1, caractérisée par le fait que la bague est mobile le long du corps.

6. Jante prévue pour un montage tubeless du pneumatique, comprenant un caisson formé par un pont supérieur (10, 40), un pont inférieur (11, 41), deux flancs (12, 13) qui se prolongent au-delà du pont supérieur par deux ailes (13, 14) d'accrochage du pneu, deux orifices (22, 23, 44, 43) dans le prolongement l'un de l'autre à chacun des ponts pour le passage d'une valve prévue pour le gonflage du pneumatique, caractérisée par le fait que le premier orifice (23, 43) situé au pont inférieur (11, 41) a un diamètre supérieur (10) au second orifice (22, 44) du pont supérieur (10, 40), et que l'un (23, 44) des deux orifices présente des moyens d'assemblage prévus pour coopérer avec la valve.

7. Jante selon la revendication 6, caractérisée par le fait que l'orifice (23, 44) prévu avec les moyens d'assemblage est un orifice percé par refoulement, dont la paroi interne est taraudée.

8. Jante prévue pour un montage tubeless du pneumatique équipée d'une valve de gonflage (6), la jante comprenant un caisson formé par un pont supérieur (10, 40), un pont inférieur (11, 41), deux flancs (12, 13) qui se prolongent au-delà du pont supérieur par deux ailes (13, 14) d'accrochage du pneu, deux orifices (22, 23, 44, 43) dans le prolongement l'un de l'autre à chacun des ponts pour le passage de la valve (6), la valve comprenant un corps avec une première portion (24, 38) prévue pour traverser le caisson, une seconde portion (25, 39) prévue pour le raccordement d'un moyen de gonflage, caractérisée par le fait que le premier orifice (22, 44) de la jante situé au pont inférieur (11, 41) a un diamètre supérieur au second orifice (23, 43) du pont supérieur (10, 40), que la première portion (24, 38) de la valve se prolonge par un embout d'injection (26, 37) de diamètre inférieur, qui est engagé dans le second orifice (22, 44) de la jante, qu'un joint d'étanchéité (28, 45) est prévu entre l'embout d'injection (26, 37) et le pont supérieur (10, 40), et que des moyens d'assemblage complémentaires assemblent l'embout (37) ou la première portion (24) du corps au pont supérieur ou au pont inférieur (11, 41) de la jante, respectivement.

9. Jante selon la revendication 8, caractérisée par le fait que l'embout d'injection (26, 37) affleure la surface externe du pont supérieur (10, 40), ou est en retrait par rapport à cette surface.

10. Jante selon la revendication 8, caractérisée par le fait que l'orifice (23) du pont inférieur (11, 41) est percé et taraudé, et que le corps de la valve (6) est fileté de façon complémentaire sur une partie de sa longueur.

11. Jante selon la revendication 8, caractérisée par le fait que l'orifice (44) du pont supérieur est percé et taraudé, et que l'embout d'injection (37) est percé et taraudé aux mêmes dimensions.

12. Jante selon la revendication 8, caractérisée par le fait que le corps de valve présente une bague (30, 48) prévue pour se serrer à la surface externe du pont inférieur (11, 41).

13. Roue de cycle prévue pour un montage tubeless du pneu, comprenant une jante (2) reliée à un moyeu central par des rayons (4), la jante comprenant un caisson formé par un pont supérieur (10, 40), un pont inférieur (11, 41), deux flancs (12, 13) qui se prolongent au-delà du pont supérieur par deux ailes (13, 14) d'accrochage du pneu, deux orifices (22, 23, 44, 43) dans le prolongement l'un de l'autre à chacun des ponts pour le passage d'une valve de gonflage (6), la valve comprenant un corps avec une première portion (24, 38) prévue pour traverser le caisson, une seconde portion (25, 39) prévue pour le raccordement d'un moyen de gonflage, caractérisée par le fait que le premier orifice (22, 44) de la jante situé au pont inférieur (11, 41) a un diamètre supérieur au second orifice (23, 43) du pont supérieur (10, 40), que la première portion (24, 38) de la valve (6) se prolonge par un embout d'injection (26, 37) de diamètre inférieur, qui est engagé dans le second orifice (22, 44) de la jante, qu'un joint d'étanchéité (28, 45) est prévu entre l'embout d'injection (26, 37) et le pont supérieur (10, 40), et que des moyens d'assemblage complémentaires assemblent l'embout (37) ou la première portion (24) du corps au pont supérieur ou au pont inférieur (11, 41) de la jante, respectivement.
